# EUROPÄISCHE PATENTANMELDUNG

(11) **EP 1 231 121 A2**
(43) Veröffentlichungstag der Anmeldung: **14.08.2002**
(21) Anmeldenummer: 02100073.2
(22) Anmeldetag: 29.01.2002
(51) Int. Cl.: B60T 8/88

(54) **Bremssystem zur Bremskraftsteuerung**

(30) Priorität: 13.02.2001 DE 10106617
(71) Anmelder: SIEMENS AKTIENGESELLSCHAFT, 80333 München (DE)
(72) Erfinder: Kucera, Markus, Dr., 93059 Regensburg (DE)

(57) **Zusammenfassung**

Die Erfindung betrifft ein Bremssystem zur Bremskraftsteuerung mit einer ersten Steuereinheit (1), einer zweiten Steuereinheit (2), einer ersten Bremseinheit (5) und einer zweiten Bremseinheit (6). Die erste Steuereinheit (1) und die zweite Steuereinheit (2) stellen jeweils eine Stellgröße zum Senden an die erste Bremseinheit (5) und an die zweite Bremseinheit (6) zur Verfügung, um die Bremskräfte in der ersten Bremseinheit (5) und in der zweiten Bremseinheit (6) zu steuern. Jeweils die erste Steuereinheit (1)und die zweite Steuereinheit (2) sind über getrennte Kombinationskanäle (7, 8, 9, 10) mit der ersten Bremseinheit (5) und mit der zweiten Bremseinheit (6) verbunden, um die jeweilige Stellgröße zu übertragen.

## Beschreibung

Die Erfindung betrifft ein Bremssystem zur Bremskraftsteuerung.

Bei elektromechanischen Bremssystemen stellt die Vernetzung der Steuereinheiten mit den Bremseinheiten einen elementaren Bestandteil der Systemarchitektur dar. Die Kommunikation zwischen den Systemkomponenten ist sicherheitsrelevant und muss daher bestimmten Sicherheitsanforderungen genügen. Insbesondere der Aspekt der Fehlertoleranz ist wesentlich. Im speziellen muss berücksichtigt werden, dass ein Kurzschluss nicht zum Totalausfall der Kommunikation zwischen den Systemkomponenten führt. Ein solcher Kurzschluss kann z.B. durch einen Unfall hervorgerufen werden, der ein Rad mit der zugehörigen Bremseinheit abschert und somit alle an dieser Steuereinheit angeschlossenen Kommunikationskanäle trennt.

Um der Sicherheitsanforderung nach Erstfehlerfestigkeit zu genügen, werden daher in der Regel zwei voneinander getrennt betriebene redundante Steuereinheiten vorgesehen, die jeweils über ein Bussystem mit den Bremseinheiten in Verbindung stehen. Dieses System hat jedoch den Nachteil, dass die an das Bussystem angeschlossenen Einheiten die verfügbare Busbandbreite reduzieren können, was zu Einschränkungen oder Verzögerungen bei der Stellgrößenübertragung führen kann. Wenn zudem die Bremseinheiten nicht untereinander, sondern nur mit den Steuereinheiten kommunizieren, ist die Ausnutzung der Busbandbreiten bei dieser Form des Bussystems ineffizient.

Aus der Druckschrift DE 197 17 686 A1 ist eine Schaltungsanordnung für ein sicherheitskritisches Regelungssystemen bekannt, bei dem zwei Steuereinheiten über getrennte Kommunikationskanäle mit Aktuatoren verbunden sind. Bei Erkennung eines Fehlers in einem der Steuergeräte wird in eine Notlauffunktion übergegangen, in der entweder ein Kreis abgeschaltet wird oder die Aktuatoren beider Kreise von der intakten Steuereinheit gesteuert werden.

Es ist Aufgabe der Erfindung, ein zuverlässiges und effizientes Bremssystem zur Verfügung zu stellen.

Diese Aufgabe wird durch das Bremssystem nach Anspruch 1 gelöst. Weitere vorteilhafte Ausgestaltungen sind in den abhängigen Ansprüchen angegeben.

Die Erfindung betrifft ein Bremssystem zur Bremskraftsteuerung mit einer ersten Steuereinheit und einer zweiten Steuereinheit sowie mit einer ersten Bremseinheit und einer zweiten Bremseinheit. Die erste Steuereinheit und die zweite Steuereinheit stellen jeweils eine Stellgröße zum Übertragen an die erste Bremseinheit und an die zweite Bremseinheit zur Verfügung. Dadurch werden jeweils die Bremskräfte in der ersten Bremseinheit und in der zweiten Bremseinheit gesteuert. Die erste Steuereinheit und die zweite Steuereinheit sind jeweils zum Übertragen der jeweiligen Stellgröße über getrennte Kommunikationskanäle mit der ersten Bremseinheit und der zweiten Bremseinheit verbunden.

Die Erfindung hat den Vorteil, dass bei Ausfall einer der Kommunikationskanäle die Bremseinheiten weiterhin funktionsfähig bleiben. Ebenso bleiben die Bremseinheiten weiterhin steuerbar, wenn eine der Steuereinheiten ausfällt. Die Erfindung sieht vor, dass jedes der Steuergeräte über einen separaten Kommunikationskanal mit jeder der angeschlossenen Bremseinheiten kommuniziert, so dass bei dem Auftreten eines Fehlers in einem der Kommunikationskanäle, der die Übertragung der Stellgröße von einem Steuergerät zu einer Bremseinheit unterbricht, jederzeit die Steuerung der betreffenden Bremseinheit von einem weiteren Steuergerät übernommen werden kann.

Selbstverständlich können die Kommunikationskanäle auch Messgrößen von einer Bremseinheit an eine der Steuereinheiten übertragen. In diesem Fall kann durch die Steuereinheiten eine Regelung z.B. der Bremskraft durchgeführt werden. Ein weiterer Vorteil der Erfindung ist, dass man durch die Aufteilung der Kommunikation auf mehrere Kommunikationskanäle erreicht, dass die Bandbreite des Kommunikationskanals, d.h. die Übertragungskapazität, geringer ausgelegt werden kann, als es der Fall ist, wenn die erste Bremseinheit und die zweite Bremseinheit über einen einzigen Kommunikationskanal mit einem Steuergerät verbunden wären.

Eine der Bremseinheiten weist ein oder mehrere Bremselemente auf, wobei die Bremselemente vorteilhafterweise an verschiedenen Rädern eines Kraftfahrzeugs angeordnet sein können. So könnte beispielsweise vorgesehen sein, dass die erste Bremseinheit zwei Bremselemente aufweist, die an zwei Vorderrädern angeordnet sind, und die zweite Bremseinheit zwei Bremselemente aufweist, die an zwei Hinterrädern angeordnet sind.

Jedes der Bremselemente ist mit den an die entsprechende Bremseinheit angeschlossenen Kommunikationskanälen verbunden. Vorzugsweise ist vorgesehen, dass die Bremselemente jeweils einen Stellgeber umfassen, der die Bremskraft bewirkt. Auf diese Weise kann vorteilhaft erreicht werden, dass ein Kommunikationskanal, der an eine Bremseinheit angeschlossen ist, Stellgrößen an mehrere Bremselemente z.B. an verschiedenen Rädern eines Kraftfahrzeugs übertragen kann.

In einer weiteren vorteilhaften Ausgestaltung ist der Kommunikationskanal als ein Bussystem ausgeführt. Ein Bussystem weist beispielsweise Leitungsverbindungen auf, die durch einen Fehler kurzgeschlossen werden können. Bei solch einem Kurzschluss fällt der durch die Leitungsverbindungen gebildete Kommunikationskanal aus. Nach dem erfindungsgemäßen Bremssystem übernimmt dann ein weiterer von dem Kurzschluss nicht betroffener Kommunikationskanal die Übermittlung der Stellgrößen von der Steuereinheit, die nicht mit dem durch den Kurzschluss außer Funktion gesetzten Kommunikationskanal verbunden ist.

In einer weiteren bevorzugten Ausführungsform ist vorgesehen, dass die erste Steuereinheit und die zweite Steuereinheit jeweils eine Fehlererkennungseinheit aufweisen, die so gestaltet ist, dass bei einem Fehler in einem der Kommunikationskanäle die Übertragung der Stellgrößen über die übrigen Kommunikationskanäle weiterhin erfolgt. Es kann beispielsweise auch eine Mitteilung über den Ausfall eines Kommunikationskanals an einen Benutzer erfolgen. Die Erfindung wird im folgenden anhand der beigefügten Zeichnungen näher erläutert, es zeigen:
Fig. 1 ein Bremssystem nach dem Stand der Technik;
Fig. 2 eine Ausführungsform eines Bremssystems gemäß der Erfindung.

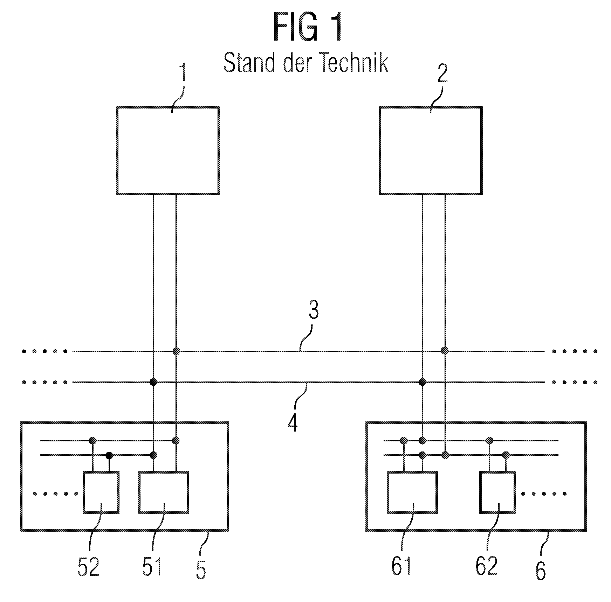

Fig. 1 zeigt ein Bremssystem nach dem Stand der Technik. Das Bremssystem umfasst eine erste Steuereinheit 1 und eine zweite Steuereinheit 2, die jeweils mit einem ersten gemeinsamen Bussystem 3 und einem zweiten gemeinsamen Bussystem 4 verbunden sind. Das erste gemeinsame Bussystem 3 und das zweite gemeinsame Bussystem 4 sind leitungsgebunden und redundant aufgebaut. Sowohl das erste Bussystem 3 als auch das zweite Bussystem 4 sind jeweils mit einer ersten Bremseinheit 5 und einer zweiten Bremseinheit 6 verbunden, so dass Daten von den Steuereinheiten 1, 2 zu allen angeschlossenen Bremseinheiten 5, 6 übertragen werden können.

Jede der Bremseinheiten 5, 6, weist Bremselemente 51, 52 bzw. 61, 62 auf. Die Bremselemente 51, 52 der ersten Bremseinheit 5 sowie die Bremselemente 61, 62 der zweiten Bremseinheit 6 sind jeweils mit dem ersten Bussystem 3 und dem zweiten Bussystem 4 verbunden.

Bei einem Ausfall eines der Bussysteme, z.B. durch einen Kurzschluss in einer oder mehreren das Bussystem bildende Verbindungsleitungen bzw. durch eine Durchtrennung wird die Übermittlung der Stellgrößen durch das jeweils andere Bussystem durchgeführt. Bei diesem Stand der Technik ist jedoch nachteilig, dass die Steuereinheiten 1, 2 und die Bremselemente 51, 52, 61, 62 an einem einzigen Bussystem betrieben werden, so dass entweder eine hohe Bandbreite des Bussystems zur Verfügung gestellt werden muss, oder man Nachteile bei der Übertragungsgeschwindigkeit der Stellgrößen in Kauf nehmen muss.

Tritt bei einem solchen System ein Kurzschluss auf, bei dem das erste und das zweite Bussystem 3, 4 gleichermaßen betroffen sind, z.B. nach einem Durchtrennen beider Bussysteme 3, 4 bei einem Unfall, nach einem Eindringen von Feuchtigkeit in eine der Steuereinheiten 1, 2 oder in eine der Bremseinheiten 5, 6 so fällt die Kommunikation zu allen Bremseinheiten 5, 6 aus, so dass ein Bremsen mit keiner der Bremseinheiten 5, 6 möglich ist.

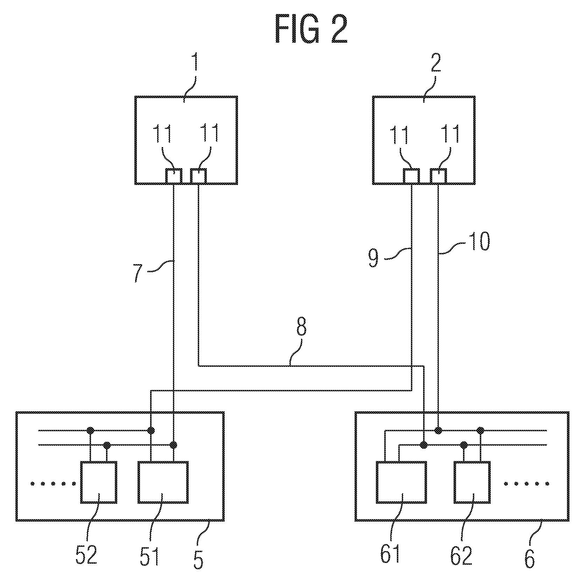

Fig. 2 zeigt ein Bremssystem gemäß einer Ausführungsform der Erfindung. Das Bremssystem weist eine erste Steuereinheit 1 und eine zweite Steuereinheit 2 wie beim zuvor beschriebenen Stand der Technik auf. Jeweils die erste Steuereinheit 1 und die zweite Steuereinheit 2 sind über getrennte Bussysteme mit der ersten Bremseinheit 5 und der zweiten Bremseinheit 6 verbunden. D.h. das Bremssystem weist vier voneinander getrennte Bussysteme auf, über die die Stellgrößen von der jeweiligen Steuereinheit 1, 2 zu der jeweiligen Bremseinheit 5, 6 übertragen werden. Es ist somit ein erstes Bussystem 7 vorgesehen, um die erste Steuereinheit 1 mit der ersten Bremseinheit 5 zu verbinden. Die erste Steuereinheit 1 wird über ein zweites Bussystem 8 mit der zweiten Bremseinheit 6 verbunden. Das gleiche gilt für die zweite Steuereinheit 2, d.h. sie wird über ein drittes Bussystem 9 mit der ersten Bremseinheit 5 und über ein viertes Bussystem 10 mit der zweiten Bremseinheit 6 verbunden.

Jede der Bremseinheiten 5, 6 weist Bremselemente 51, 52, 61, 62 auf. Die Bremselemente 51, 52 bei der ersten Bremseinheit 5 sind jeweils mit dem ersten Bussystem 7 und dem dritten Bussystem 9 verbunden, und die Bremselemente 61, 62 der zweiten Bremseinheit 6 sind mit dem zweiten Bussystem 8 und dem vierten Bussystem 10 verbunden.

Auf diese Weise kann erreicht werden, dass bei einem Ausfall eines der vier Bussysteme jedes der Bremselemente 51, 52, 61, 62 der zwei Bremseinheiten 5,6 weiterhin durch die jeweils nicht an dem defekten Bussystem angeschlossene Steuereinheit 1, 2 gesteuert werden kann. Darüber hinaus ist vorteilhaft, dass für jedes Bussystem 7, 8, 9, 10 nur eine reduzierte Bandbreite für die Datenübertragung vorgesehen sein muss, da die Menge der übertragenen Daten gegenüber die an ein Bussystem angeschlossenen Einzelkomponenten und somit der in Fig. 1 dargestellten Ausführung halbiert ist.

In den Steuereinheiten 1, 2 kann pro Kommunikationskanal jeweils eine Fehlererkennungseinheit 11 vorgesehen werden, die einen auftretenden Fehler, z.B. einen Kurzschluss in einem der Bussysteme 7, 8, 9, 10 erkennt. Die Erkennung eines Fehlers kann beispielsweise über eine Widerstandsmessung erfolgen.

Selbstverständlich kann vorgesehen sein, dass sich an jedem der Bussysteme 7, 8, 9, 10 ein oder mehrere Bremseinheiten befinden können, wobei jeder der Bremseinheiten ein oder mehrere Bremselemente 51, 52, 61, 62 umfassen können.

Selbstverständlich umfasst die Erfindung auch Bremssysteme mit mehr als zwei Steuereinheiten 1, 2, wobei z.B. gemäß dem Prinzip der Erfindung vorgesehen sein kann, dass jede der Steuereinheiten 1, 2 über separate Bussysteme mit dem einen oder mehreren Bremseinheiten 5, 6 verbunden sein kann. Auf diese Weise schafft man eine erhöhte Redundanz.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Bremssystem zur Bremskraftsteuerung
mit einer ersten Steuereinheit (1) und einer zweiten Steuereinheit (2), sowie mit einer ersten Bremseinheit (5) und einer zweiten Bremseinheit (6),
wobei die erste Steuereinheit (1) und die zweite Steuereinheit (2) jeweils eine Stellgröße zum Senden an die erste Bremseinheit (5) und an die zweite Bremseinheit (6) zur Verfügung stellen, um die Bremskräfte in der ersten Bremseinheit (5) und in der zweiten Bremseinheit (6) zu steuern, und die
erste Steuereinheit (1) und die zweite Steuereinheit (2) zum Übertragen der jeweiligen Stellgröße über getrennte Kommunikationskanäle (7, 8, 9, 10) mit der ersten Bremseinheit (5) und mit der zweiten Bremseinheit (6) verbunden sind,
**dadurch gekennzeichnet,**
**dass** die erste Steuereinheit (1) und die zweite Steuereinheit (2) jeweils eine Fehlererkennungseinheit (11) aufweisen, die so gestaltet ist, dass bei einem Fehler in einem der Kommunikationskanäle (7, 8, 9, 10) die Übertragung der Stellgrößen über die übrigen Kommunikationskanäle (7, 8, 9, 10) weiterhin erfolgt.

2. Bremssystem nach Anspruch 1, **dadurch gekennzeichnet, dass** die erste Bremseinheit (5) und die zweite Bremseinheit (6) jeweils eines oder mehrere Bremselemente (51, 52, 61, 62) umfassen, wobei jedes der Bremselemente (51, 52, 61, 62) mit den an die entsprechende Bremseinheit (5, 8) angeschlossenen Kommunikationskanälen (7, 8, 9, 10) verbunden ist.

3. Bremssystem nach einem der Ansprüche 1 bis 2, **dadurch gekennzeichnet, dass** die Bremselemente (51, 52, 61, 62) jeweils einen Stellgeber umfassen, der die Bremskraft bewirkt.

4. Bremssystem nach einem der Ansprüche 1 bis 3, **dadurch gekennzeichnet, dass** mindestens einer der Kommunikationskanäle (7, 8, 9, 10) ein Bussystem ist.

5. Bremssystem nach einem der Ansprüche 1 bis 4, **dadurch gekennzeichnet, dass** mindestens einer der Kommunikationskanäle (7, 8, 9, 10) eine Leitungsverbindung ist.
